Europäisches Patentamt

European Patent Office

Office européen des brevets

(11) Publication number: **0 435 625 A2**

## EUROPEAN PATENT APPLICATION

(21) Application number: **90314180.2**

(22) Date of filing: **21.12.90**

(51) Int. Cl.5: **C01B 33/34**

(30) Priority: **29.12.89 US 459219**

(43) Date of publication of application:
**03.07.91 Bulletin 91/27**

(84) Designated Contracting States:
**BE DE DK FR GB IT NL SE**

(71) Applicant: **MOBIL OIL CORPORATION**
**3225 Gallows Road**
**Fairfax Virginia 22037(US)**

(72) Inventor: **Kuehl, Guenter Hinrich**
**1956 Cardinal Lake Drive**
**Cherry Hill, New Jersey 08003(US)**
Inventor: **McCullen, Sharon Brawner**
**119 Colonial Drive**
**Newtown, Pennsylvania 18940(US)**

(74) Representative: **Colmer, Stephen Gary et al**
**Mobil Court 3 Clements Inn**
**London WC2A 2EB(GB)**

(54) Synthesis of faujasite.

(57) In a method for preparing faujasite, a gel is formed comprising a mixture of water, alkali metal aluminate and alkali metal silicate. The gel is then broken by subjecting the gel to high shear agitation to convert the gel to a homogeneous, pourable mixture. The resultant mixture is then aged for at least 6 hours at a temperature of at least 15°C before being crystallized to produce faujasite in the form of platelets having a particle size of 0.1 microns or less.

EP 0 435 625 A2

# SYNTHESIS OF FAUJASITE

This invention relates to the synthesis of faujasite.

Effects of faujasite crystal size on activity and selectivity for fluid catalytic cracking reactions have been reported in the literature. More particularly K. Rajagopalan, A. W. Peters and G. C. Edwards, Applied Catalysis, 23 (1986) 69-80, reported that NaY having a crystal size of 0.05 microns and greater was diffusion limited for cracking of heavy gas oil over USY.

There are reports in the patent literature which disclose techniques to reduce faujasite crystal size. One general approach has been to add organic or metal to the synthesis mixture. U.S. Patent No. 3,755,538 suggests that when B, V, P, Mo, W, Ge and Ga are added to the synthesis gel, 0.2-0.6 micron faujasite crystals are produced. U.S. Patent No. 4,372,931 suggests that even smaller faujasite crystals, 0.05 microns, were obtained by adding a mono-or disaccharide to the synthesis mixture. 0.01-0.1 micron crystals resulted when water miscible organic solvents were added to the gel but, as reported in U.S. Patent No. 3,516,786, the product $SiO_2/Al_2O_3$ was not higher than 2.5. Thermal shattering techniques to reduce faujasite crystal size to 0.1 micron have also been reported in U.S. Patent Nos. 3,864,282 and 3,528,615.

According to the present invention, there is provided a method for preparing faujasite in the form of platelets having a particle size of 0.1 microns or less, said method comprising the steps of:

(i) forming a gel comprising a mixture of water, alkali metal aluminate and alkali metal silicate, said mixture being formed at a temperature of at least 15°C;

(ii) breaking the gel of step (i) by subjecting said gel to high shear agitation conditions at a temperature of at least 15°C, whereby said gel is converted to a homogeneous, pourable mixture;

(iii)aging said mixture of step (ii) for at least 6 hours at a temperature of at least 15°C; and then

(iv) crystallizing the aged mixture of step (iii).

When water, alkali metal aluminate and alkali metal silicate are mixed at room temperature in proportions capable of forming faujasite upon crystallization, a thick, continuous gel sets up. This gel is so thick that it is not pourable. When this gel is stirred under normal agitation conditions for preparing faujasite, lumps of the gel remain observable during agitation, and the gel reverts to its thick nonpourable state when agitation is discontinued.

In accordance with the present invention, it has been discovered that this gel can be broken (i.e. converted) into a homogeneous, pourable mass by subjecting the gel to sufficient high shear agitating conditions. Surprisingly, this mass remains homogeneous and pourable even after agitation is stopped, and this flowable mass does not revert to a continuous nonpourable gel state even upon standing at room temperature for an extended period of time, e.g., for 8 hours. It has further been surprisingly discovered that this pourable mass forms faujasite of small crystallite size when subjected to conditions for forming faujasite crystals. The resultant faujasite crystals are in the form of platelets having maximum dimensions of 0.1 microns or less, e.g., 0.05 microns or less, e.g., from 0.01 to 0.04 microns. The particle size of these platelets may be determined by examining representative samples of these platelets under a scanning electron microscope (SEM) and measuring the maximum dimension of the platelets.

The microcrystalline faujasite is formed from a mixture of water, alkali metal aluminate and alkali metal silicate. Preferably, the mixture comprises water, sodium aluminate, sodium hydroxide and sodium silicate in the following mole ratios:

$$SiO_2/Al_2O_3 \quad = \quad 4-20$$
$$Na_2O/Al_2O_3 \quad = \quad 6-15$$
$$H_2O/SiO_2 \quad = \quad 18-125$$

This mixture may optionally contain further components such as faujasite seeds, potassium hydroxide or one or more organic compositions. Preferably, however, the mixture is organic-free, by which is meant that the reaction mixture need not contain any organic compounds, such as mono- or disaccharides or water miscible organic solvents, conventionally used to prepare faujasite of small crystallite size. The mixture should be formed at a temperature of at least 15°C and preferably 20-50°C.

As mentioned previously, when the present aluminate and silicate containing reaction mixture is mixed, a thick, nonpourable gel forms. The gel is therefore broken to produce a homogeneous, pourable mixture by subjecting the gel to high shear agitation at a temperature of at least 15°C, preferably 20-50°C. For example, the mixture may be stirred under high shear agitation conditions for one hour. The stirring may

EP 0 435 625 A2

then be discontinued, and the condition of the mixture observed. If the mixture is nonpourable or nonhomogeneous, e.g., as evidenced by the presence of lumps of gel, then the high shear agitation conditions may be resumed for 1 to 3 hours. Accordingly, the duration of the high shear agitation conditions may be, e.g., from 1 to 4 hours.

After the gel has been converted into a pourable, homogeneous mixture, the mixture is aged for at least 6 hours, e.g., from 6 to 24 hours, preferably for at least 8 hours. This aging involves maintaining the mixture at a temperature of at least $15°C$ but sufficiently low to prevent the onset of crystallization, typically from $20°C$ to $50°C$. Most conveniently, this aging involves letting the mixture sit at ambient conditions without stirring or heating. The aging may take place in the same vessel used for high shear agitation or the mixture may be transferred to a separate vessel.

The aged mixture is then crystallized by elevating the temperature of the mixture to a sufficient crystallization temperature, typically $60-120°C$, preferably $90-110°C$, until crystallization is complete, which may take from 2-24 hours, preferably 3-10 hours.

After the microcrystalline faujasite is formed, it may be recovered by techniques well-known in the art including decanting of the mother liquor, filtering and washing of the solid residue.

Using the process described herein, it is possible to prepare faujasite having a silica/alumina molar ratio of greater than 3 or, if sufficient acid is added to the crystallization mixture, to a value greater than 4. For example, a sufficient amount of acid may be added to the aged mixture prior to the crystallization step to reduce the $OH^-/SiO_2$ molar ratio of the mixture from greater than 2.0 to less than 1.8. A preferred acid for this purpose is $H_2SO_4$.

The crystallization of the reaction mixture may take place under static conditions or the mixture may be subjected to continuous or intermittent, mild stirring during crystallization. Such mild stirring aids in the uniform transfer of heat as the temperature of the reaction mixture is elevated.

## EXAMPLE 1

29 grams of $NaAlO_2$ dissolved in deionized (DI) $H_2O$ were added to 645 grams of a sodium silicate/NaOH solution then mixed for one hour at greater than 3000 rpm using a Premier Series mixer. The molar ratios were $SiO_2/Al_2O_3 = 16$, $OH/SiO_2 = 2.1$ and $H_2O/SiO_2 = 21$. The mixture was aged overnight at room temperature then crystallized at $100°C$ under static conditions for 6 hours. X-ray diffraction (XRD) analysis showed the product was faujasite with extensive line broadening compared to conventional NaY with 1-2 micron particles. These data suggest significantly smaller faujasite particles, much less than 1 micron, are formed. Scanning electron micrograph (SEM) analysis of the product showed particles much smaller than 0.05 micron. The product had a $SiO_2/Al_2O_3$ ratio of 3.1.

## COMPARATIVE EXAMPLE A

29 grams of $NaAlO_2$ dissolved in DI $H_2O$ were added to 645 grams of a sodium silicate/NaOH solution then mixed for one hour at low speed and without high shear. The molar ratios were $SiO_2/Al_2O_3 = 16$, $OH/SiO_2 = 2.1$ and $H_2O/SiO_2 = 21$. The zeolite pregel was aged overnight at room temperature then crystallized under static conditions for 6 hours. XRD analysis showed the product was faujasite. The (XRD) pattern showed much less line broadening compared to the product produced in Example 1. SEM analysis showed 0.1-0.2 micron particles. The product had a $SiO_2/Al_2O_3$ ratio of 2.9.

## EXAMPLE 2

145 grams of $NaAlO_2$ dissolved in DI $H_2O$ were added to 3225 grams of a sodium silicate/NaOH solution then mixed for one hour at greater than 3000 rpm using a Premier Series mixer. The molar ratios were $SiO_2/Al_2O_3 = 16$, $OH/SiO_2 = 2.1$ and $H_2O/SiO_2 = 21$. The mixture was aged overnight at room temperature. 500 grams $H_2SO_4$ were mixed with 1500 grams $H_2O$ then added to the mixture and mixed at high speed and high shear until the mixture appeared fluid and homogeneous. The molar ratios following acid addition were $SiO_2/Al_2O_3 = 16$, $OH/SiO_2 = 1.1$ and $H_2O/SiO_2 = 29$. The mixture was then crystallized under static conditions for 6 hours. XRD analysis showed the product was faujasite. SEM analysis showed 0.05-0.1 micron particles. $SiO_2/Al_2O_3$ ratio was 4.5.

## COMPARATIVE EXAMPLE B

145 grams of $NaAlO_2$ dissolved in DI $H_2O$ were added to 3225 grams of a sodium silicate/NaOH solution

3

then mixed for one hour at greater than 3000 rpm using a Premier Series mixer. The molar ratios were $SiO_2/Al_2O_3 = 16$, $OH/SiO_2 = 2.1$ and $H_2O/SiO_2 = 16$. The mixture was aged overnight at room temperature. 500 grams $H_2SO_4$ were mixed with 1500 grams $H_2O$ then added to the mixture. A very viscous gel was formed which was difficult to stir to a smooth mixture. The molar ratios following acid addition were $SiO_2/Al_2O_3 = 16$, $OH/SiO_2 = 1.1$ and $H_2O/SiO_2 = 24$. The gel was crystallized under static conditions for 6 hours. XRD analysis showed the product was faujasite. SEM analysis showed 0.4 micron particles.

A comparison of Example 2 and comparative Example B shows the importance of adding sufficient water to ensure a homogeneous mixture prior to crystallization.

**Claims**

1. A method for preparing faujasite in the form of platelets having a particle size of 0.1 microns or less, said method comprising the steps of:
   (i) forming a gel comprising a mixture of water, alkali metal aluminate and alkali metal silicate, said mixture being formed at a temperature of at least $15^\circ$ C;
   (ii) breaking the gel of step (i) by subjecting said gel to high shear agitation conditions at a temperature of at least $15^\circ$ C, whereby said gel is converted to a homogeneous, pourable mixture;
   (iii) aging said mixture of step (ii) for at least 6 hours at a temperature of at least $15^\circ$ C; and then
   (iv) crystallizing the aged mixture of step (iii). ·

2. The method according to claim 1, wherein the gel formed at step (i) has the following composition in terms of mole ratios:

$$SiO_2/Al_2O_3 \quad = \quad 4{-}20$$
$$Na_2O/Al_2O_3 \quad = \quad 6{-}15$$
$$H_2O/SiO_2 \quad = \quad 18{-}125$$

3. The method according to claim 1 or claim 2, wherein acid is added to said aged mixture of step (iii) prior to the crystallization step (iv) to reduce the $OH^-/SiO_2$ molar ratio of said mixture less than 1.8.

4. The method according to claim 3, wherein said acid is $H_2SO_4$.

6. A method according to claim 1, wherein said mixture of step (i) is organic-free.

7. The method of any preceding claim, wherein the crystallization step (iv) is conducted at a temperature of $60{-}120^\circ$ C for 2-24 hours.

8. The method of any preceding claim, wherein the crystallization step (iv) is conducted at a temperature of $90{-}110^\circ$ C for 3-10 hours.